# EUROPÄISCHE PATENTSCHRIFT

(11) **EP 0 918 184 B1**
(45) Veröffentlichungstag und Bekanntmachung des Hinweises auf die Patenterteilung: **25.02.2004**
(21) Anmeldenummer: 98121247.5
(22) Anmeldetag: 07.11.1998
(51) Int. Cl.: F16L 33/00, F16L 33/16

(54) **Anschlusselement für Rohre oder Schläuche**
Connection member for pipes
Elément de connection pour tuyaux

(30) Priorität: 20.11.1997 DE 19751361
(43) Veröffentlichungstag der Anmeldung: 26.05.1999
(73) Patentinhaber: ITT MANUFACTURING ENTERPRISES, INC., Wilmington, Delaware 19801 (US)
(72) Erfinder: Becker, Hermann, 59929 Brilon (DE)
(74) Vertreter: Dreiss, Fuhlendorf, Steimle & Becker

(56) Entgegenhaltungen:
- WO-A-95/33157
- DE-A- 3 439 522
- DE-A- 4 122 455
- DE-A- 19 543 782

## Beschreibung

Die Erfindung betrifft ein Anschlußelement für Rohre oder Schläuche aus elastisch aufweitbarem Material mit einem Rohrteil aus unelastischem Material, das abdichtend in ein Rohr- oder Schlauchende einsteckbar ist und ein sogenanntes Tannenzapfen- oder Dornprofil aufweist (siehe, zum Beispiel, WO-A-95/33157).

Anschluß- oder Kupplungselemente mit derartigen Einsteckenden sind bereits in vielfältiger Form bekannt. Sie werden bei Rohr- und Schlauchleitungen verwendet, die für Wasser oder andere Flüssigkeiten mit allenfalls einigen bar Überdruck gegenüber dem Umgebungsdruck ausgelegt sind. Dabei sollen die am Rohrteil ausgebildeten Tannenzapfen- oder Dornprofile gewährleisten, daß Rohr- oder Schlauchende ohne zusätzliche Befestigungsteile mit dem Anschlußelement abdichtend verbunden werden können, wobei in aller Regel eine kombinierte kraft- und formflüssige Verbindung zustande kommt, bei der das Rohr- oder Schlauchende geringfügig aufgeweitet wird und radial nach innen wirkende Rückstellkräfte ausübt, während die scharfen Kanten des Tannenzapfen- oder Dornprofils aus unelastischem Material sich wie Widerhaken in die Innenwand des Rohr- oder Schlauchendes einkrallen.

Es dürfte ohne weiteres einleuchten, daß der Erfolg einer derartigen kombinierten Einsteckverbindung in ganz erheblichem Maße von den Fertigungstoleranzen der beteiligten Bauteile und von ihren Materialeigenschaften abhängig ist. Zur Verbesserung der Abdichtung derartiger Einsteckverbindungen ist bereits vorgeschlagen worden, am vorderen Ende des Rohrteils einen kreiszylindrischen Abschnitt vorzusehen, und in diesem eine umlaufende Nut für einen O-Ring auszubilden. Auf diese Weise konnte die Dichtwirkung verbessert werden. Es hat sich jedoch herausgestellt, daß eine verbesserte Dichtwirkung nur erreicht werden kann, wenn das Einstecken des Rohrteils in das Rohr- oder Schlauchende mit großer Sorgfalt durchgeführt wird, weil anderenfalls der O-Ring aus der Nut herausgedrückt oder aber über den Umfang verteilt in sich unterschiedlich verdrillt wird, wodurch seine Dichtwirkung ganz oder teilweise verloren geht. Wegen der engen Abstimmung des zylindrischen Bereichs auf den Innendurchmesser des Rohr- oder Schlauchendes werden beim Einstecken am O-Ring erhebliche Scherkräfte wirksam, die zudem von der Oberflächenrauhigkeit der Innenwand des Rohroder Schlauchendes abhängig sind, so daß ein Verschieben oder Beschädigen des O-Rings auch bei sorgfältiger Handhabung nicht zuverlässig vermieden werden kann.

Der Erfindung liegt die Aufgabe zugrunde, die vorgenannten Nachteile bei einem Anschlußelement der eingangs genannten Art zu vermeiden und das einsteckbare Rohrteil derartig auszubilden, daß eine zuverlässige Abdichtung der Einsteckverbindung erreicht und ein Verschieben oder Beschädigen des Dichtelements vermieden werden kann.

Diese Aufgabe wird erfindungsgemäß durch die im Anspruch 1 definiezten Merkmale gelöst.

Mit derartigen Querschnittsformen für die Nut und die Dichtung wird erreicht, daß die beim Einstecken auftretenden Scherkräfte an der Dichtung sicher aufgenommen werden können, ohne daß die Dichtung aus der Nut herausgetrieben oder aber in sich derart verformt wird, daß ihre Dichtwirkung verloren geht. Der rechteckige Nutgrund und der darauf abgestimmte Querschnitt der ringförmigen Dichtung gewährleisten eine sichere formschlüssige Verbindung zwischen Rohrteil und Dichtung, die auch bei einem Einstecken in ein Rohr- oder Schlauchende zuverlässig hält, ohne daß insoweit eine überdurchschnittlich sorgfältige Handhabung erforderlich wäre.

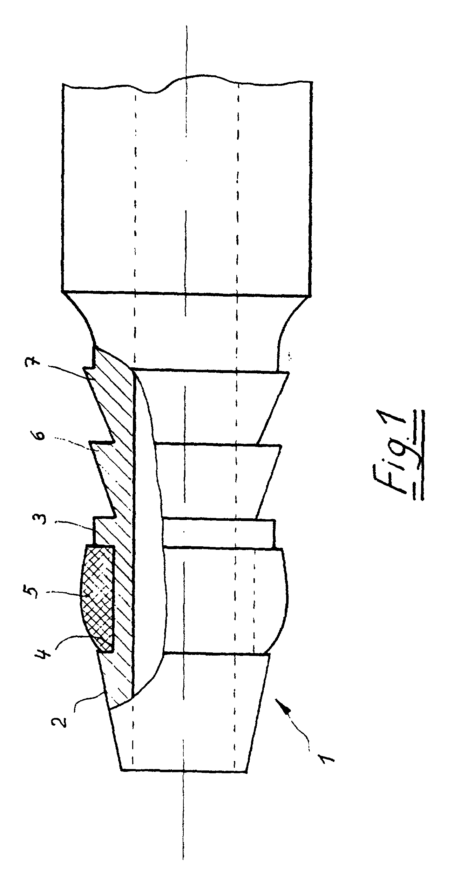

Vorteilhafte Weiterbildungen des Erfindungsgedankens sind in den Unteransprüchen 2 bis 7 beschrieben. Weitere Einzelheiten werden anhand des in Fig. 1 dargestellten Ausführungsbeispiels näher erläutert.

In Fig. 1 ist das Einsteckende eines Anschlußelements für Rohre oder Schläuche aus elastisch aufweitbarem Material dargestellt, das im wesentlichen aus einem Rohrteil 1 aus unelastischem Material besteht. Bei diesem Rohrteil 1 sind in an sich bekannter Weise Tannenzapfen- oder Dornringe 6, 7 ausgebildet, die jeweils einen sich von vorne nach hinten konisch vergrößernden Durchmesser und am hinteren Ende eine ringförmige Begrenzungsfläche aufweisen, die senkrecht zur Hauptachse des Rohrteils 1 verläuft. Erfindungsgemäß ist am vorderen Ende 2 des Rohrteils 1 statt eines Tannenzapfenoder Dornrings ein sich axial erstreckender kreiszylindrischer Bereich 3 vorgesehen, dessen Außendurchmesser auf den Innendurchmesser des Rohr- oder Schlauchendes abgestimmt ist, für den das Anschlußelement vorgesehen ist. In diesem zylindrischen Bereich 3 ist eine umlaufende, im Querschnitt rechteckige Nut 4 ausgebildet, in der eine ringförmige Dichtung 5 mit nicht kreisförmigem Querschnitt angeordnet ist. Erfindungsgemäβ ist der Querschnitt der Dichtung 5 so ausgebildet, daß er innenseitig an den rechteckigen Querschnitt der Nut 4 angepasst ist und diese vollständig ausfüllt. An der Außenseite weist die Dichtung eine Kurvenform auf, deren Radius sich von vorne nach hinten stetig vergrößert. An der vorderen Begrenzungswand der Nut ist der Außendurchmesser der Dichtung 5 etwas kleiner als der Durchmesser der Begrenzungswand der Nut 4, während am hinteren Ende der Dichtung 5 deren Durchmesser größer ist als die Begrenzungswand der Nut 4 bzw. als der zylindrische Bereich 3.

Versuche haben gezeigt, daß sich mit diesen Querschnittsformen für Nut 4 und Dichtung 5 einerseits ein problemloses Einstecken des Rohrteils in einem Rohr- oder Schlauchende ermöglichen läßt, andererseits eine sich in axialer Richtung verhältnismäßig lang erstreckenden Dichtungsfläche erreichen läßt, die für alle einschlägigen Anwendungsfälle ausreichend ist und eine dauerhafte Abdichtung zwischen Rohrteil 1 und Einsteckende des Rohres oder Schlauches gewährleistet. Die Außenkontur der Dichtung 5 erleichtert das Einstecken und vermindert die Scherkräfte, die beim Einstecken auf die Dichtung 5 wirken.

Gemäß einem weiteren Aspekt des Erfindungsgedankens weist der nach hinten auf den zylindrischen Bereich 3 folgende Tannenzapfen- oder Dornring 6 einen größeren Durchmesser auf als der zylindrische Bereich 3. Sind nach hinten zu weitere Tannenzapfen- oder Dornringe 7 vorgesehen, so sollen deren Durchmesser ebenfalls jeweils geringfügig größer sein als der Durchmesser des vorausgehenden Tannenzapfen- oder Dornrings. Auf diese Weise wird erreicht, daß das Rohr- oder Schlauchende beim Einstecken des Rohrteils 1 in Stufen stärker aufgeweitet wird, was insbesondere bei solchen Materialien vorteilhaft sein kann, die nur ein geringes elastisches Rückstellvermögen aufweisen. Dabei erfolgt jeder weitere Aufweitschritt praktisch unabhängig von dem voraufgehenden Schritt, so daß es zur Erzielung der erforderlichen Haltekräfte nicht erforderlich ist, daß sich die Aufweitungen der jeweils vorausgehenden Stufen vollständig zurückbilden können.

Mit den erfindungsgemäßen Merkmalen ist ein Anschlußelement geschaffen, das bei einfacher Handhabung eine zuverlässige Abdichtung der Einsteckverbindung gewährleistet und das auch für nur wenig elastische Rohr- oder Schlauchenden brauchbar ist.

## Patentansprüche

1. Anschlußelement für Rohre oder Schläuche aus elastisch aufweitbarem Material mit einem Rohrteil (1) aus unelastischem Material, das abdichtend in ein Rohr- oder Schlauchende einsteckbar ist und ein sogenanntes Tannenzapfen- oder Dornprofil aufweist, wobei am vorderen Ende (2) des Rohrteils (1) ein sich axial erstreckender, kreiszylindrischer Bereich (3) mit einem auf den Innendurchmesser des Rohroder Schlauchendes abgestimmten Außendurchmesser vorgesehen ist und wobei in diesem Bereich (3) eine umlaufende, im Querschnitt rechteckige Nut (4) ausgebildet ist, in der eine ringförmige Dichtung (5) mit nicht kreisförmigem Querschnitt angeordnet ist, wobei die Dichtung (5) einen rechteckigen. Querschnitt aufweist, wobei der Querschnitt nur auf der Innenseite rechteckig ausgebildet ist und wobei er auf der Außenseite über die gesamte Längserstreckung eine konvexe Kurvenform hat, **dadurch gekennzeichnet, daß** der Querschnitt die Nut (4) vollständig ausfüllt und daβ die Außenseite der Dichtung (5) in dem dem vorderen Ende (2) des Rohrteils (1) benachbarten Bereich eine Kurvenform mit kleinerem Radius aufweist als in dem entgegengesetzten Bereich.

2. Anschlußelement nach Anspruch 1 **dadurch gekennzeichnet, daß** die Kurvenform der Außenseite einen sich von vorn nach hinten stetig vergrößernden Radius aufweist.

3. Anschlußelement nach einem der vorhergehenden Ansprüche, **dadurch gekennzeichnet, daß** der Außendurchmesser der Dichtung (5) am vorderen Ende kleiner ist als der Durchmesser der Begrenzungswand der Nut (4).

4. Anschlußelement nach einem der vorhergehenden Ansprüche, **dadurch gekennzeichnet, daß** die vordere Begrenzungswand der Nut (4) einen kleineren Durchmesser hat als die hintere Begrenzungswand bzw. als der kreiszylindrische Bereich (3).

5. Anschlußelement nach Anspruch 4, **dadurch gekennzeichnet, daß** der kreiszylindrische Bereich (3) einen kleineren Durchmesser hat als der Durchmesser des nach hinten zu nächstfolgenden Tannenzapfen- oder Dornrings (6).

6. Anschlußelement nach Anspruch 5, **dadurch gekennzeichnet, daß** nach hinten zu weitere Tannenzapfen- oder Dichtringe (7) mit jeweils größerem Durchmesser vorgesehen sind.

7. Anschlußelement nach einem der vorhergehenden Ansprüche, **dadurch gekennzeichnet, daß** die Durchmesservergrößerung je Stufe im Bereich von 5 bis 12 % liegt.

## Claims

1. A connector element for tubing or hoses of elastically expandable material with a tubular part (1) of inelastic material that can be inserted tightly sealed into a tubing or hose end and that features a so called pine-cone or thorn profile, wherein an axially extending cylindrical area (3) with an outer diameter corresponding to the inner diameter of the tubing or hose end is provided at a front end (2) of the tubular part and wherein a circumferential groove (4), rectangular in cross section, into which an annular seal (5) of noncircular cross section is arranged, is formed in the cylindrical area (3), wherein the seal (5) having a rectangular cross section, wherein the cross-section is rectangular only on the inside and wherein it is convex over the entire longitudinal extent on the outside, **characterized in that** the cross section completly fills out the groove (4) and that the outside of the seal (5) has a curvature with a smaller radius in an area adjacent to the front end (2) of the tubular part (1) than in an opposite area.

2. Connector element according to claim 1, **characterized in that** the curvature of the outside has a radius increasing steadily from the front to the back.

3. Connector element according to one of the preceding claims, **characterized in that** the outer diameter of the seal (5) is smaller at the front end than the diameter of a limitation wall of the groove (4).

4. Connector element according to one of the preceding claims, **characterized in that** a front limitation wall of the groove. (4) has a smaller diameter than the rear limitation wall respectively the cylindrical area (3).

5. Connector element according to claim 4, **characterized in that** the cylindrical area (3) has a smaller diameter than the diameter of a next successive pine-cone or thorn ring to the rear.

6. Connector element according to claim 5, **characterized in that** additional pine-cone or seal rings (7) are provided to the rear, each with a larger diameter.

7. The connector element according to one of the preceding claims, **characterized in that** diameter increase per each additional step lies in the range of 5 to 12%.

## Revendications

1. Élément de connexion pour tubes ou tuyaux flexibles, constitué en matériau élastiquement extensible et comportant une partie tubulaire (1) en matériau non élastique qui est enfichable avec étanchement dans l'extrémité d'un tube ou d'un tuyau et qui présente un profil dit "en pomme de pin" ou "en épines", dans lequel est prévue, à l'extrémité antérieure (2) de la partie tubulaire (1), une zone cylindrique circulaire (3) s'étendant axialement et présentant un diamètre extérieur adapté au diamètre intérieur de l'extrémité du tube ou du tuyau, et dans lequel est réalisée, dans cette zone (3), une gorge périphérique (4) de section transversale rectangulaire dans laquelle est agencé un joint annulaire (5) de section transversale non circulaire, le joint (5) présentant une section transversale rectangulaire, la section transversale étant réalisée rectangulaire uniquement sur le côté intérieur et présentant une forme à courbure convexe sur le côté extérieur sur toute l'extension longitudinale, **caractérisé en ce que** la section transversale remplit complètement la gorge (4), et **en ce que** le côté extérieur du joint (5) présente dans la zone voisine de l'extrémité antérieure (2) de la partie tubulaire une forme en courbe avec un rayon inférieur à celui dans la zone opposée.

2. Élément de connexion selon la revendication 1, **caractérisé en ce que** la forme en courbe du côté extérieur présente un rayon qui s'agrandit constamment d'avant en arrière.

3. Élément de connexion selon l'une des revendications précédentes, **caractérisé en ce qu'**à l'extrémité antérieure le diamètre extérieur du joint (5) est inférieur au diamètre de la paroi de délimitation de la gorge (4).

4. Élément de connexion selon l'une des revendications précédentes, **caractérisé en ce que** la paroi de délimitation antérieure de la gorge (4) présente un diamètre inférieur à celui de la paroi de délimitation postérieure ou de la zone cylindrique circulaire (3).

5. Élément de connexion selon la revendication 4, **caractérisé en ce que** la zone cylindrique circulaire (3) présente un diamètre inférieur au diamètre de l'anneau en pomme de pin ou en épines (6) qui suit vers l'arrière.

6. Élément de connexion selon la revendication 5, **caractérisé en ce qu'**il est prévu vers l'arrière d'autres anneaux en pomme de pin ou en épines (7) présentant chacun un diamètre plus grand.

7. Élément de connexion selon l'une des revendications précédentes, **caractérisé en ce que** l'agrandissement en diamètre pour chaque gradin est compris entre 5 et 12 %.
